# EUROPÄISCHE PATENTSCHRIFT

(11) **EP 3 892 860 B1**
(45) Veröffentlichungstag und Bekanntmachung des Hinweises auf die Patenterteilung: **06.09.2023**
(21) Anmeldenummer: 21177046.6
(22) Anmeldetag: 09.10.2017
(51) Int. Cl.: F04D 29/32, F04D 19/00, F04D 19/02

(54) **AXIALLÜFTERRAD**
AXIAL FAN IMPELLER
ROUE DE VENTILATEUR AXIAL

(30) Priorität: 26.10.2016 DE 102016012801
(43) Veröffentlichungstag der Anmeldung: 13.10.2021
(62) Teilanmeldung aus: 17195492.8
(73) Patentinhaber: MAN Truck & Bus SE, 80995 München (DE)
(72) Erfinder: Neff, Andreas, 81247 München (DE); Gell, Christian, 85293 Reichertshausen (DE)
(74) Vertreter: v. Bezold & Partner Patentanwälte - PartG mbB

(56) Entgegenhaltungen:
- EP-A2- 2 381 112
- EP-B1- 1 519 052
- JP-A- H03 151 599
- JP-A- 2005 188 325
- US-A- 3 642 382

## Beschreibung

Die vorliegende Erfindung betrifft ein Axiallüfterrad. Insbesondere sind ein Axiallüfterrad für den Kühler eines Kraftfahrzeugmotors und ein damit ausgestattetes Nutzfahrzeug beschrieben.

Um dem Kühler eines Kühlkreislaufs Umgebungsluft zuzuführen, ist beispielsweise in Strömungsrichtung hinter dem Kühler ein Axiallüfterrad zur Erzeugung eines Unterdrucks am Kühler angeordnet. Abhängig von Umgebungslufttemperatur und Kühlleistung muss eine Lüfternabe des Axiallüfterrads eine erhebliche mechanische Leistung an die Laufschaufeln des Axiallüfterrads übertragen, die im Nutzfahrzeugbereich über 10 kW betragen kann. Dabei treten in der Lüfternabe entsprechend große Zentrifugalkräfte und, zur Leistungsübertragung und bei Drehzahländerungen, große Scherkräfte auf.

Das Dokument EP 1 519 052 B1 beschreibt ein Axiallüfterrad, dessen Nabenstirnfläche eine Mechanik mit verschiebbaren Blendenscheiben umfasst. Bei Drehung des Axiallüfterrads verschließen die Blendenscheiben die Nabenstirnfläche. Bei abgeschaltetem Lüfter wird die Nabenstirnfläche durch eine Vorspannung partiell geöffnet.

Jedoch steht eine in die rotierende Lüfternabe integrierte Mechanik mit beweglichen Teilen, insbesondere mit in Drehrichtung gegenüber der Lüfternabe verschiebbaren Blendenscheiben, einem leistungseffizienten Betrieb des Axiallüfterrads entgegen. Durch die zusätzliche rotierende Masse der Mechanik wird die Leistungsaufnahme des Axiallüfterrads, und damit beispielsweise der Kraftstoffverbrauch, erhöht. Ferner ist eine in die Lüfternabe integrierte Mechanik den genannten Kräften ausgesetzt und kann im Luftstrom durch Verschmutzung blockieren. Zwar ist es zur Reduzierung der rotierenden Masse grundsätzlich möglich, die Lüfternabe mit permanenten Öffnungen zu versehen. Jedoch wird durch die Öffnungen der kühlerseitig aufgebaute Unterdrucks gemindert.

Das Dokument JP 2005 188325 A betrifft einen mit einem Motor verbundenen Lüfter mit mehrere Schaufeln, die sich von dem Nabenteil nach außen erstrecken. Das Nabenteil besitzt eine zylindrische Grundform und ist auf der Rückseite geöffnet.

Das Dokument EP 2 381 112 A2 offenbart einen Axiallüfter mit einer Nabe zur Verbindung des Axiallüfters mit einem elektrischen Antriebsmotor, wobei die Nabe im Wesentlichen topfartig ausgebildet ist und einen Stirnbereich sowie einen im Wesentlichen zylindrischen Umfangsbereich aufweist, und wobei die Nabe eine zentrische Montageöffnung aufweist, über welche die Nabe mit der Antriebswelle des Motors verbunden werden kann, wobei der Stirnbereich zur Erzielung einer im Wesentlichen biegeweich Verbindung von mehreren Ausformungen unterbrochen wird, und wobei sich zwischen jeweils benachbarten Ausformungen stegartige Verbindungselemente ausformen, wobei sich die Ausformungen im Wesentlichen gleichmäßig um die Mittelachse der zentrischen Montageöffnung auf dem Stirnbereich erstrecken.

Das Dokument US 3 642 382 A offenbart einen anderen Axiallüfter nach dem Stand der Technik.

Somit ist es eine Aufgabe der vorliegenden Erfindung, ein energieeffizienteres Axiallüfterrad anzugeben, das den Belastungsanforderungen beispielsweise im Nutzfahrzeugbereich genügt.

Diese Aufgabe wird durch ein Axiallüfterrad und ein damit ausgestattetes Kraftfahrzeug gemäß dem unabhängigen Patentanspruch 1 gelöst. Vorteilhafte Ausführungen und Anwendungen sind Gegenstand der abhängigen Patentansprüche und werden im Folgenden unter teilweise Bezugnahme auf die Figuren näher erläutert.

Erfindungsgemäß ist ein Axiallüfterrad, insbesondere für den Kühler eines Kraftfahrzeugmotors, bereitgestellt. Das Axiallüfterrad umfasst einen Kranzring mit einer Vielzahl an Laufschaufeln; und eine Nabe mit einem mit einer Antriebswelle verbundenen oder verbindbaren Innenring und zur Drehmomentübertragung mit dem Innenring und dem Kranzring verbundenen Anschlussflächen entlang eines Außenumfangs der Nabe. Die Nabe weist zwischen dem Innenring und dem Außenumfang Durchgangsausnehmungen auf. Mindestens ein innerhalb des Kranzrings drehfest am Axiallüfterrad angeordnetes Element ist dazu ausgebildet, bei rotierendem Axiallüfterrad eine Druckdifferenz in axialer Richtung aufrecht zu erhalten.

Die Laufschaufeln können sich vom Kranzring radial außerhalb des Kranzrings erstrecken. Die Laufschaufeln können einen Luftstrom antreiben. Durch das mindestens eine Element kann eine Rezirkulation (auch: Rückströmung) des Luftstroms im Umfang der Nabe ( innerhalb des Außenumfangs) verhindert werden.

Indem am Axiallüfterrad das mindestens eine Element drehfest, insbesondere ohne Relativbewegung zur Nabe, angeordnet ist, können Ausführungsbeispiele des Axiallüfterrads den Belastungs- und Leistungsanforderungen im Nutzfahrzeugbereich genügen. Alternativ oder ergänzend kann aufgrund der Durchgangsausnehmungen die rotierende Masse der Nabe zur Verringerung der notwendigen Antriebsleistung, insbesondere bei wechselnden Drehzahlen, reduziert werden.

Das mindestens eine Element kann einen Druckausgleich oder eine Druckabschwächung der Luft über die Durchgangsausnehmungen verhindern. Dabei kann das mindestens eine Element ohne oder ohne wesentlichen Beitrag zur rotierenden Masse der Nabe ausgeführt sein, beispielsweise da das mindestens eine Element nicht an der Drehmomentübertragung (vom Innenring über die Anschlussflächen auf den Kranzring) beteiligt ist.

Die Anschlussflächen sind entlang des Außenumfangs durch einen Außenring, beispielsweise durch Ringsegmente, entlang des Außenumfangs realisiert. Der Außenring kann umlaufend geschlossen sein. Die Ringsegmente können voneinander beabstandet sein. Die Anschlussflächen können in einer Drehebene des Axiallüfterrads bzw. der Nabe liegen.

Der Außenring, beispielsweise die Ringsegmente, ist radial innerhalb des Kranzrings angeordnet. Der Innenring kann radial innerhalb des Außenumfangs angeordnet sein. Die Drehmomentübertragung zwischen dem Innenring und dem Kranzring kann ausschließlich über die Anschlussflächen erfolgen.

Die Nabe kann in Leichtbauweise ausgeführt sein, insbesondere zwischen Innenring und Außenumfang (beispielsweise dem Außenring). Erfindungsgemäß liegt der Innenring außerhalb einer Drehebene der Anschlussflächen (beispielsweise außerhalb einer Drehebene des Außenrings). Beispielsweise kann die Nabe zumindest am Innenring als Verbindungsstelle zur Antriebswelle hin ausbauchen oder gewölbt sein.

Herkömmliche Lüfternaben für den Lüfterantrieb sind so ausgeführt, dass die Lüfternabe selbst die Unterdruckseite (auch: Lüftersaugseite) von der Überdruckseite (z. B. dem Motorraum) trennt, wodurch aufgrund einer zur Drehmomentübertragung ausgebildeten Wanddicke der Lüfternabe deren Trägheitsmoment höher als bei Ausführungsbeispielen ist. Würde das Trägheitsmoment der Lüfternabe durch Öffnungen reduziert, würde sich die Kühlleistung bei gleicher Drehzahl verschlechtern, und es müsste zum Aufbau derselben Druckdifferenz die Drehzahl erhöht werden. Dagegen können Ausführungsbeispiele mit dem am Axiallüfterrad drehfest befestigten Element die Luftrezirkulation verhindern, ohne das Trägheitsmoment des Axiallüfterrads oder dessen Nabe signifikant zu erhöhen. So kann bei gleicher Drehzahl mit geringerer Leistungsaufnahme dieselbe Druckdifferenz erzeugt werden.

Das mindestens eine Element kann gemäß einem nicht durch die Erfindung beanspruchten Beispiel ein zusätzliches Abdeckblech und/oder eine Luftleiteinrichtung, welche der Rezirkulation entgegenwirkt, umfassen. Die Luftleiteinrichtung kann weitere Laufschaufeln innerhalb des Umfangs des Kranzrings umfassen. Die Luftleiteinrichtung kann mit der Nabe einstückig-integral sein (beispielsweise durch Formgebung der Nabe ohne zusätzliche Masse) oder als zusätzliches Blech angeschraubt sein. Der Leichtbau der Nabe mit den Durchgangsausnehmungen ermöglicht beispielsweise eine Kraftstoffreduzierung ohne Rezirkulation der Kühlluft.

Die Druckdifferenz in axialer Richtung kann durch die rotierenden Laufschaufeln aufgebaut werden, beispielsweise radial außerhalb des Kranzrings. Die Druckdifferenz in axialer Richtung kann durch das mindestens eine Element radial innerhalb des Kranzrings aufrechterhalten werden.

Der Innenring kann über eine Presspassung mit der Antriebswelle verbunden oder verbindbar sein. Das Axiallüfterrad kann hydrostatisch, elektrisch oder mechanisch (z. B. über einen Riemen) angetrieben sein.

Ein in die Drehebene (d. h. axial) projizierter Flächenanteil der Nabe zwischen Innenring und Außenumfang (beispielsweise Außenring) kann kleiner sein als ein in die Drehebene (d. h. axial) projizierter Flächenanteil der Durchgangsausnehmungen zwischen Innenring und Außenumfang (beispielsweise Außenring). Alternativ oder ergänzend kann eine radiale Weite der Durchgangsausnehmungen größer sein als ein Durchmesser (z. B. ein Innendurchmesser oder Inkreisdurchmesser) des Innenrings.

Das mindestens eine Element überdeckt und/oder verschließt das Innere des Kranzrings und/oder die Durchgangsausnehmungen zwischen Innenring und Außenumfang ( Außenring). Das überdeckende oder verschließende Element wird auch als Abdeckung bezeichnet.

Das mindestens eine Element kann gemäß einem nicht durch die Erfindung beanspruchten Beispiel weitere Laufschaufeln umfassen. An dem mindestens einen Element ( der Abdeckung) können weitere Laufschaufeln angeformt sein.

Das mindestens eine Element kann gemäß einem nicht durch die Erfindung beanspruchten Beispiel Speichen zur Drehmomentübertragung zwischen Innenring und Außenumfang ( Außenring) umfassen. Die Speichen können als weitere Laufschaufeln ausgebildet sein. Die Nabe kann zwischen den Speichen die Durchgangsausnehmungen aufweisen.

Die nicht durch die Erfindung beanspruchten weiteren Laufschaufeln, die beispielsweise durch Speichen ausgebildet sind und/oder an der Abdeckung angeformt sind, können gegenüber einer Drehebene des Axiallüfterrads angestellt sein und/oder in Umlaufrichtung (oder Drehrichtung) gekrümmt sein. Die weiteren Laufschaufeln können einen Anstellwinkel mit der Drehebene einschließen oder eine Steigung aufweisen. Der Anstellwinkel kann (beispielsweise am Außenumfang oder am Umfang des Außenrings) mindestens 5° bis 15° betragen.

Das mindestens eine Element kann an der Nabe starr angeordnet sein. Das mindestens eine Element kann im Betrieb des Axiallüfterrads bezüglich der Nabe unbeweglich (insbesondere drehfest und schwenkfest bezüglich der Nabe) sein. Beispielsweise kann eine Lage des mindestens einen Elements in Bezug zur Nabe drehzahlunabhängig sein.

Das mindestens eine Element kann aus einem Leichtmetall (z. B. Aluminium) oder einem Faserverbundwerkstoff (z. B. mit Glas- oder Kohlenstoff-Fasern) gefertigt sein. Das mindestens eine Element ist als dünnwandige Abdeckung ausgebildet. Beispielsweise kann eine axiale Wanddicke der Abdeckung kleiner sein als eine axiale Wanddicke der Nabe. Das mindestens eine Element, d.h. die Abdeckung, kann aus Aluminiumblech gefertigt sein.

Das mindestens eine Element, d.h. die Abdeckung, kann ohne Beitrag zur Drehmomentübertragung (insbesondere ohne einen Beitrag zur Übertragung von Antriebsmoment von der Antriebswelle) an den Kranzring sein.

Ein Durchmesser des mindestens einen Elements kann größer sein als ein Außendurchmesser des Außenumfangs (beispielsweise des Außenrings). Der Durchmesser des mindestens einen Elements kann (zumindest im Wesentlichen) gleich oder kleiner als ein Innendurchmesser des Kranzrings sein.

Das mindestens eine Element kann in axialer Richtung versetzt zur Nabe angeordnet sein. Der Innenring ist außerhalb einer durch die Anschlussflächen oder den Außenring definierten Drehebene angeordnet. Beispielsweise kann die Abdeckung auf einer stromaufwärtigen Seite der durch die Anschlussflächen oder den Außenring definierten Drehebene angeordnet sein. Der Innenring kann auf einer stromabwärtigen Seite der durch die Anschlussflächen oder den Außenring definierten Drehebene angeordnet sein.

Gemäß einem weiteren Aspekt ist ein Kraftfahrzeug, insbesondere ein Nutzfahrzeug, bereitgestellt. Das Kraftfahrzeug umfasst eine Lüfteranordnung mit einem Axiallüfterrad gemäß einer Ausführung des vorgenannten Aspekts. Die Lüfteranordnung kann einen Kühler zur Kühlung eines Aggregates des Antriebsstrangs, beispielsweise einer Brennkraftmaschine und/oder eines elektrischen Traktionsenergiespeichers, umfassen.

Weitere Merkmale und Vorteile der Erfindung werden im Folgenden unter Bezugnahme auf die beigefügten Zeichnungen beschrieben. Es zeigen:
- Figur 1: eine schematische Ansicht eines ersten Ausführungsbeispiels einer Nabe für ein Axiallüfterrad;
- Figur 2: eine schematische Ansicht eines zweiten Ausführungsbeispiels einer Nabe für ein Axiallüfterrad;
- Figur 3: eine perspektivische Darstellung einer Lüfteranordnung mit einem ersten Ausführungsbeispiel eines Axiallüfterrads;
- Figur 4: eine perspektivische Darstellung einer Lüfteranordnung mit einem zweiten, nicht durch die Erfindung beanspruchten Ausführungsbeispiel eines Axiallüfterrads,
- Figuren 5A und 5B: eine perspektivische Darstellung einer Lüfteranordnung mit einem dritten, nicht durch die Erfindung beanspruchten Ausführungsbeispiel eines Axiallüfterrads; und
- Figur 6: eine schematische Schnittdarstellung eines Ausführungsbeispiels der Lüfteranordnung mit Axiallüfterrad und Kühlerwanne.

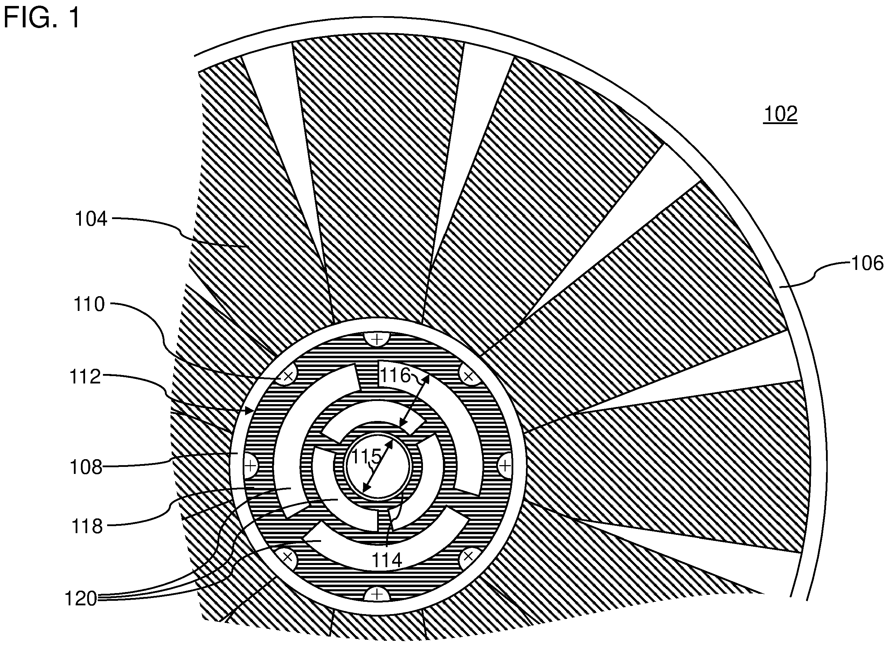

Figur 1 zeigt ein erstes Ausführungsbeispiel eines allgemein mit Bezugszeichen 102 bezeichneten Axiallüfterrads. Das Axiallüfterrad umfasst eine Vielzahl an Laufschaufeln 104, die radial außenseitig in einen Mantelring 106 und radial innenseitig in einen Kranzring 108 eingefasst sind. Am Kranzring 108 können radial innenseitig Kranzstege 110 auskragen, mit Befestigungsstellen zur verdrehfesten Verbindung (beispielsweise Verschraubung) mit einer Nabe 112.

Die Nabe 112 umfasst einen mit einer Antriebswelle verbindbaren Innenring 114 und Anschlussflächen an einem Außenumfang 118 der Nabe 112, d.h. einen Außenring oder Segmente eines solchen Rings. Über die Anschlussflächen, beispielsweise über den Außenring, ist die Nabe 112 mit dem Kranzring 108 verbunden.

Erfindungsgemäß sind die Anschlussflächen entlang des Außenumfangs durch einen Außenring 118 gebildet. Wo im Folgenden auf den Außenring 118 abgestellt wird, kann dieser dahingehend modifiziert sein, dass nur Segmente des beschriebenen Außenrings 118 vorhanden sind und die Anschlussflächen bilden.

Über einen Bereich 116 zwischen dem Innenring 114 und dem Außenring 118 ist Drehmoment (beispielsweise ein Antriebsmoment und/oder ein Verzögerungsmoment des Axiallüfterrads 102) übertragbar. Der Zwischenbereich 116 umfasst eine Vielzahl an Durchgangsausnehmungen 120.

Der Zwischenbereich 116 ist aufgrund der Durchgangsausnehmungen 120 in Leichtbauweise ausgeführt. Beispielsweise ist die Masse und/oder das Trägheitsmoment des Zwischenbereichs 116 minimiert unter der Nebenbedingung der Übertragung des Drehmoments zwischen Innenring 114 und Außenring 118 der Nabe 112.

Im in Figur 1 gezeigten Ausführungsbeispiel umfasst der Zwischenbereich 116 mindestens einen Ring, der über radiale Stege innenseitig mit dem Innenring 114 und außenseitig mit dem Außenring 118 zur Übertragung des Drehmoments verbunden ist. Die innenseitigen radialen Stege und die außenseitigen radialen Stege sind umlaufend gleichmäßig verteilt, d. h. mit gleichen Winkelabständen. Beispielsweise schließen drei innenseitige radiale Stege jeweils paarweise einen Winkel von 120° ein. Ebenso schließen drei außenseitige radiale Stege paarweise einen Winkel von 120° ein. Dabei sind außenseitige und innenseitige Stege nicht radialfluchtend angeordnet. Beispielsweise schließt bei drei innenseitigen radialen Stegen und drei außenseitigen radialen Stegen jeder innenseitige radiale Steg mit einem außenseitigen radialen Steg einen Winkel von 60° ein. Bei einer doppelt so großen Anzahl an Stegen sind die entsprechenden Winkel halb so groß.

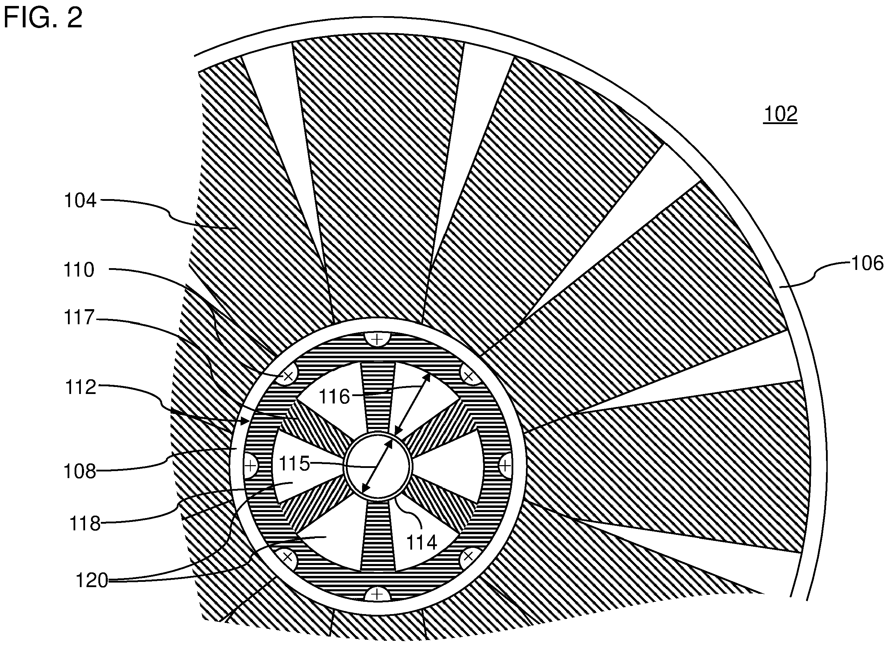

Figur 2 zeigt ein zweites Ausführungsbeispiel einer Nabe 112 für ein Axiallüfterrad 102. Gleiche oder funktional entsprechende Merkmale sind mit übereinstimmenden Bezugszeichen in den Figuren bezeichnet.

Das in Figur 2 gezeigte zweite Ausführungsbeispiel der Nabe 112 umfasst im Zwischenbereich 116 eine Vielzahl an Speichen 117, die jeweils radial vom Innenring 114 zum Außenring 118 verlaufen. Zwischen den Speichen 117 sind die Durchgangsausnehmungen 120 der Nabe 112.

In jedem Ausführungsbeispiel der Nabe 112 kann deren Leichtbau durch einen Flächenanteil der Nabe 112 im Zwischenbereich 116 erreicht werden, der kleiner ist als ein Flächenanteil der Durchgangsausnehmungen 120. Beispielsweise ist im Zwischenbereich 116 zwischen Innenring 114 und Außenring 118 der in axialer Richtung auf die Drehebene projizierte Anteil der Nabe 112 (d. h. der geschlossene Flächenanteil des Zwischenbereichs 116) kleiner als der entsprechend projizierte Anteil der Durchgangsausnehmungen 120.

Alternativ oder ergänzend ist eine radiale Weite des Zwischenbereichs 116 (beispielsweise die Länge der Speichen 117) größer als ein Durchmesser 115 des Innenrings 114.

Das Axiallüfterrad 102 umfasst ferner (beispielsweise in Kombination mit jedem vorgenannten Ausführungsbeispiel der Nabe 112) ein innerhalb des Kranzrings 108 drehfest am Axiallüfterrad 102 angeordnetes Element, das dazu ausgebildet ist, bei rotierendem Axiallüfterrad 102 eine Druckdifferenz in axialer Richtung aufrecht zu erhalten. Das mindestens eine Element hält die Druckdifferenz aufrecht, indem die Durchgangsausnehmungen 120 verschlossen oder überdeckt werden. Gemäß einem nicht durch die Erfindung beanspruchten alternativen Beispiel kann das mindestens eine Element aufgrund der Drehung der Nabe 112 lokal eine Druckdifferenz erzeugen, die der aufrechtzuerhaltenden Druckdifferenz entspricht.

Vorteilhafterweise trägt das mindestens eine Element nicht oder nicht wesentlich zur Masse oder zum Trägheitsmoment der Nabe 112 oder des Axiallüfterrads 102 bei. Erfindungsgemäß umfasst das mindestens eine Element eine dünnwandige Abdeckung, die eine Luftrezirkulation (oder Teilrückströmung) durch die Durchgangsausnehmungen 120 verhindert. Gemäß einem nicht durch die Erfindung beanspruchten alternativen Beispiel kann das mindestens eine Element weitere Laufschaufeln umfassen, die an einer Abdeckung der Durchgangsausnehmungen 120 angeformt sind oder die zugleich Teil der drehmomentübertragenden Struktur im Zwischenbereich 116 sind.

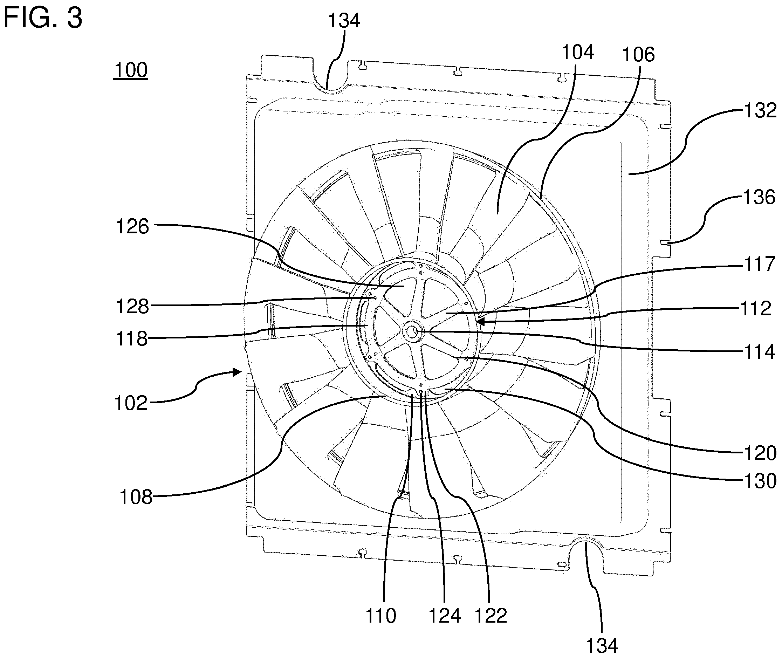

Figur 3 zeigt ein erstes Ausführungsbeispiel des Axiallüfterrads 102 im Kontext einer beispielhaften Lüfteranordnung 100. Die Nabe 112 des Axiallüfterrads 102 kann alternative oder ergänzende Merkmale gemäß jedem der mit Bezug auf die Figuren 1 und 2 beschriebenen Beispiele der Nabe 112 umfassen.

Optional umfasst der Außenring 118 der Nabe 112 vom Außenring 118 in radialer Richtung auskragende Nabenstege 122 mit Befestigungsöffnungen 124, durch welche die Nabe 112 mit dem Kranzring 108 (beispielsweise an den Kranzstegen 110) verdrehfest verbunden ist.

Am Außenring 118 ist als das die Druckdifferenz aufrechterhaltende Element eine Abdeckung 126 auf der stromaufwärtigen Seite der Nabe 112 angeordnet (d. h. auf der Rückseite der Ansicht in Figur 3). Die Abdeckung 126 umfasst eine Kreisscheibenfläche oder eine Kegelfläche, deren Spitze in Verlängerung der Achse der Nabe 112 liegt. Ein Außendurchmesser der Abdeckung 126 entspricht im Wesentlichen einem Innendurchmesser des Kranzrings 108, so dass das Innere des Kranzrings 108 durch die Abdeckung 126 gegen Luftrezirkulation verschlossen ist.

Die Abdeckung 126 ist an einer Vielzahl von Befestigungsöffnungen 128 im Außenring 118 umlaufend befestigt. Da die tragende Struktur der Nabe 112, insbesondere zur Übertragung des Drehmoments, durch Innenring 114, Zwischenbereich 116 (beispielsweise die in Figur 3 gezeigten Speichen 117) und Außenring 118 gebildet ist, ist die Abdeckung 126 keiner Kraftübertragung oder Drehmomentübertragung auf die Laufschaufeln 104 des Axiallüfterrads 102 ausgesetzt. Dementsprechend kann die Abdeckung 126 dünnwandig sein, ohne wesentlichen Beitrag zur Masse und zum Trägheitsmoment der Nabe 112 oder des Axiallüfterrads 102. Vorzugsweise ist die Abdeckung 126 aus Aluminiumblech gefertigt.

Beispielsweise kann die Abdeckung 126 auch eine Öffnung 130 zwischen Außenring 118 und Kranzring 108 verschließen, die aufgrund der vom Außenring 118 radial nach außen auskragenden Nabenstege 122 entsteht.

Die in Figur 3 gezeigte beispielhafte Lüfteranordnung 100 umfasst das Axiallüfterrad 102 und einen Kühler, der stromaufwärts auf der Unterdruckseite des Axiallüfterrads 102 angeordnet ist. Zur besseren Übersichtlichkeit ist in Figur 3 nur eine Kühlerwanne 132 des Kühlers gezeigt. Die Kühlerwanne 132 umfasst mindestens zwei Aussparungen 134 für einen in axialer Richtung geführten Kühlwasserkreislauf und Langlöcher 136 zur Montage der Kühlerwanne 132, beispielsweise in einem Kraftfahrzeug.

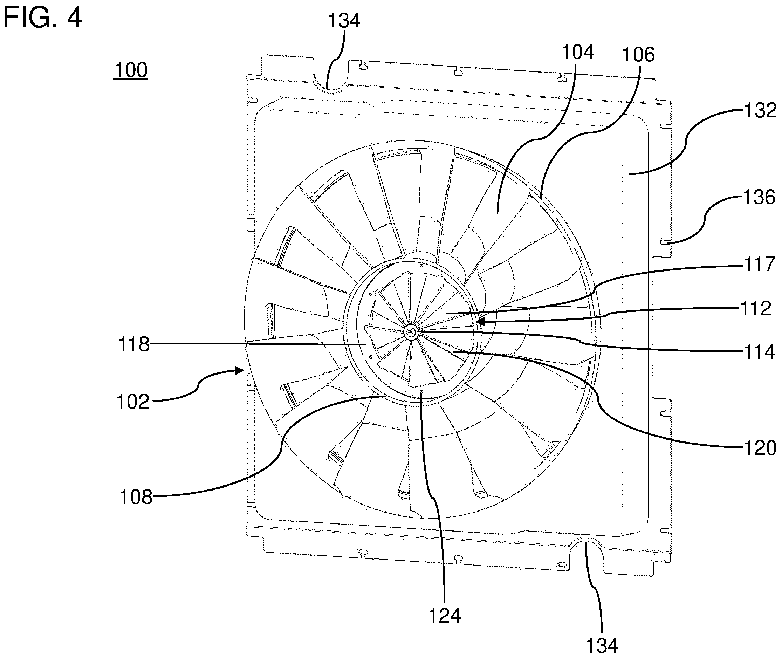

Figur 4 zeigt ein zweites Ausführungsbeispiel des Axiallüfterrads 102 im Kontext einer beispielhaften Lüfteranordnung 100. Merkmale, die mit jenen der Figuren 1 bis 3 (strukturell oder funktional) übereinstimmen oder austauschbar sind, sind mit gleichen Bezugszeichen versehen.

Beim in Figur 4 gezeigten zweiten, nicht durch die Erfindung beanspruchten Ausführungsbeispiel des Axiallüfterrads 102 sind die Speichen 117 zwischen Innenring 114 und Außenring 118 als weitere Laufschaufeln ausgebildet. Diese weiteren Laufschaufeln sind ein Beispiel für das die Druckdifferenz aufrechterhaltende Element.

Beispielsweise umfassen die Speichen 117 Abschnitte einer Dreiecksfläche, die um einen Anstellwinkel gegenüber der Drehebene geneigt ist. Alternativ umfassen die Speichen 117 eine gekrümmte Fläche, beispielsweise ein Abschnitt eines hyperbolischen Paraboloids, wobei die zwei Kanten jeder Speiche 117 nicht parallel zur Drehebene des Axiallüfterrads 102 sind. Die beiden Kanten jeder Speiche 117 sind beim in Figur 4 gezeigten zweiten Ausführungsbeispiel windschiefe Geraden.

Beim zweiten Ausführungsbeispiel des Axiallüfterrads 102 kann die Abdeckung 126 entfallen. Vorzugsweise sind die Befestigungsöffnungen 124 direkt im Außenring 118 der Nabe 112 eingebracht (beispielsweise ohne auskragende Nabenstege 122), so dass der Außenring 118 am Kranzring 108 anliegt (beispielsweise ohne eine Öffnung 130 zwischen Außenring 118 und Kranzring 108).

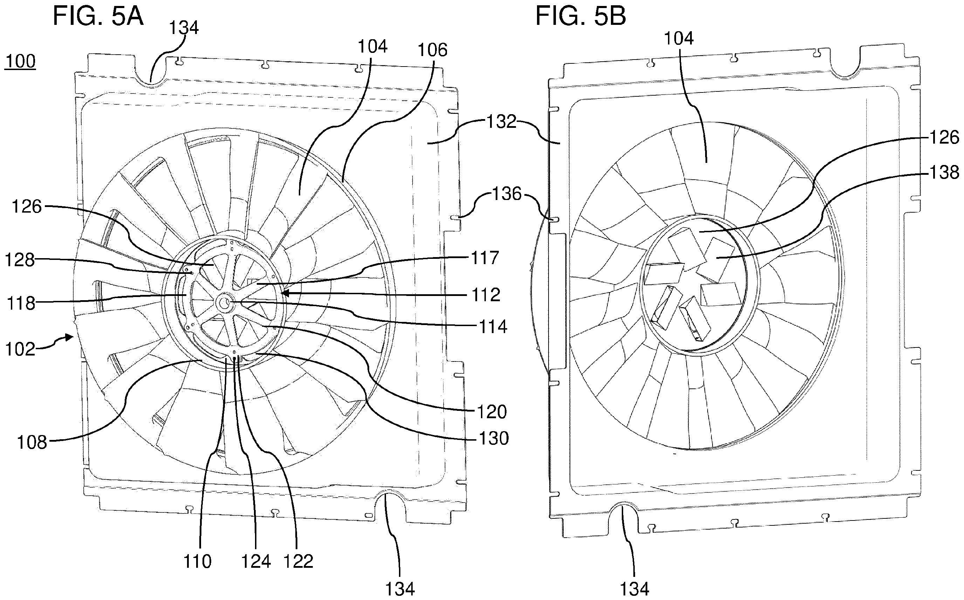

Die Figuren 5A und 5B zeigen schematisch eine Vorderansicht bzw. eine Rückansicht eines dritten, nicht durch die Erfindung beanspruchten Ausführungsbeispiels des Axiallüfterrad 102 in Kontext einer beispielhaften Lüfteranordnung 100.

Das dritte Ausführungsbeispiel kann als eine Variante des ersten Ausführungsbeispiels beschrieben werden. Übereinstimmende oder funktional entsprechende Merkmale sind mit gleichen Bezugszeichen wie beim ersten Ausführungsbeispiel der Figur 3 versehen.

Die Abdeckung 126 umfasst eine ebene und zur Drehebene parallele Grundfläche. Aus der Grundfläche ragen weitere Laufschaufeln 138 in axialer Richtung auf der stromaufwärtigen Seite (d. h. auf der Unterdruckseite) hervor. Jede der weiteren Laufschaufeln 138 umfasst eine in Drehrichtung offene Eingangsseite, die durch eine von der jeweiligen Laufschaufel 138 überdeckte Öffnung in der Grundfläche mit der stromabwärtigen Seite der Nabe 112 (d. h. der Überdruckseite des Axiallüfterrads 102) in Fluidverbindung steht.

Durch die Weiterbildung des ersten Ausführungsbeispiels gemäß dem dritten Ausführungsbeispiel kann nicht nur die Luftrezirkulation durch die Durchgangsausnehmungen 120 verhindert werden, sondern ein zusätzlicher Beitrag zum Lufttransport durch die Nabe 112 kann den Hauptlufttransport durch die Laufschaufeln 104 ergänzen. Ferner sind insbesondere das zweite und dritte Ausführungsbeispiel kombinierbar. Beispielsweise ist die mit weiteren Laufschaufeln 138 versehene Abdeckung 126 auf der stromaufwärtigen Seite mit der Nabe 112

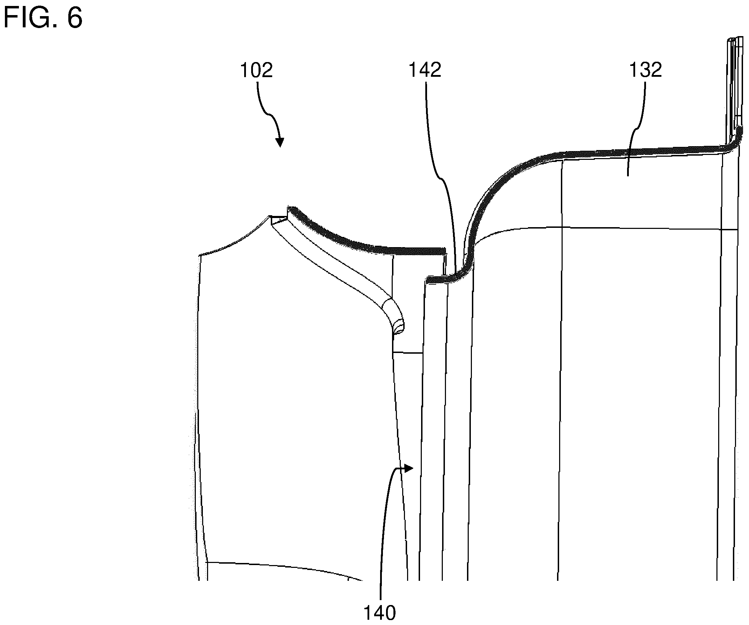

verschraubbar, deren Speichen 117 als weitere Laufschaufeln ausgebildet sind. Figur 6 zeigt eine mit jedem vorstehend beschriebenen Ausführungsbeispiel kombinierbare Ausgestaltung der Kühlerwanne 132 und des Mantelrings 106. An einer lüfterseitigen Öffnung 140 der Kühlerwanne 132 ist ein die Öffnung 140 umlaufender Kragen 142 ausgebildet. Ein Kreisdurchmesser des Kragens 142 ist kleiner, beispielsweise um weniger als 5% kleiner, als ein Kreisdurchmesser des kühlerseitigen Mantelrings 106. Der Mantelring 106 und der Kragen 142 sind in axialer Richtung (d. h. in horizontaler Richtung in Figur 6) überlappend angeordnet, so dass zwischen dem rotierenden Mantelring 106 und dem stationären Kragen 142 ein schmaler Luftspalt die Luftrezirkulation am Randbereich der Lüfteranordnung 100 verhindert.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Lüfteranordnung
- 102: Axiallüfterrad
- 104: Laufschaufeln
- 106: Mantelring
- 108: Kranzring
- 110: Kranzsteg
- 112: Nabe
- 114: Innenring der Nabe
- 115: Durchmesser des Innenrings
- 116: Zwischenbereich der Nabe
- 117: Nabenspeichen
- 118: Außenumfang oder Außenring der Nabe
- 120: Durchgangsausnehmung in Nabe
- 122: Nabensteg
- 124: Befestigungsöffnung in Nabe für Kranzring
- 126: Abdeckung
- 128: Befestigungsöffnung im Außenring für Abdeckung
- 130: Öffnungen zwischen Außenring und Kranzring
- 132: Kühlerwanne
- 134: Aussparungen für Kühlwasserkreislauf
- 136: Langloch
- 138: Laufschaufeln in Abdeckung
- 140: Lüfterseitige Öffnung der Kühlerwanne
- 142: Kragen der Kühlerwanne

## Patentansprüche

1. Axiallüfterrad (102), insbesondere für den Kühler eines Kraftfahrzeugmotors, umfassend:
einen Kranzring (108) mit einer Vielzahl an Laufschaufeln (104); und
eine Nabe (112) mit einem mit einer Antriebswelle verbundenen oder verbindbaren Innenring (114) und zur Drehmomentübertragung mit dem Innenring (114) und dem Kranzring (108) verbundenen Anschlussflächen entlang eines Außenumfangs (118) der Nabe (112), wobei die Nabe (112) zwischen dem Innenring (114) und dem Außenumfang (118) Durchgangsausnehmungen (120) aufweist, wobei die Anschlussflächen entlang des Außenumfangs (118) durch einen radial innerhalb des Kranzrings (108) angeordneten Außenring entlang des Außenumfangs realisiert sind, wobei der Innenring (114) außerhalb einer durch die Anschlussflächen definierten Drehebene angeordnet ist, **dadurch gekennzeichnet,**
**dass** mindestens ein innerhalb des Kranzrings (108) drehfest am Axiallüfterrad angeordnetes Element (126) dazu ausgebildet ist, bei rotierendem Axiallüfterrad (102) eine Druckdifferenz in axialer Richtung aufrechtzuerhalten, dass das mindestens eine Element (126) die Durchgangsausnehmungen (120) zwischen dem Innenring (114) und dem Außenumfang (118) und/oder das Innere des Kranzrings (108) verschließt, und dass
das mindestens eine Element (126) als dünnwandige Abdeckung (126) ausgebildet ist.

2. Axiallüfterrad nach Anspruch 1, wobei ein in die Drehebene projizierter Flächenanteil der Nabe (112) zwischen dem Innenring (114) und dem Außenumfang (118) kleiner ist als ein in die Drehebene projizierter Flächenanteil der Durchgangsausnehmungen (120) zwischen dem Innenring (114) und dem Außenumfang (118).

3. Axiallüfterrad nach Anspruch 1 oder 2, wobei eine radiale Weite der Durchgangsausnehmungen (120) größer ist als ein Durchmesser (115) des Innenrings (114).

4. Axiallüfterrad nach einem der Ansprüche 1 bis 3, wobei das mindestens eine Element (126) an der Nabe (112) starr angeordnet ist.

5. Axiallüfterrad nach einem der Ansprüche 1 bis 4, wobei das mindestens eine Element (126) aus Aluminiumblech gefertigt ist.

6. Axiallüfterrad nach einem der Ansprüche 1 bis 5, wobei das mindestens eine Element (126) kein Drehmoment an den Kranzring überträgt.

7. Axiallüfterrad nach einem der Ansprüche 1 bis 6, wobei ein Durchmesser des mindestens einen Elements (126)
a) größer ist als ein Außendurchmesser des Außenumfangs (118), und/oder
b) gleich oder kleiner als ein Innendurchmesser des Kranzrings (108) ist.

8. Axiallüfterrad nach einem der Ansprüche 1 bis 7, wobei das mindestens eine Element (126) in axialer Richtung versetzt zur Nabe (112) angeordnet ist.

9. Axiallüfterrad nach einem der Ansprüche 1 bis 8, wobei das mindestens eine Element (126)
a) eine Rezirkulation des Luftstroms im Umfang der Nabe (112), beispielsweise innerhalb des Außenumfangs (118), verhindert, und/oder
b) drehfest, insbesondere ohne Relativbewegung zur Nabe (112), am Axiallüfterrad angeordnet ist, und/oder
c) einen Druckausgleich oder eine Druckabschwächung der Luft über die Durchgangsausnehmungen (120) verhindert, und/oder
d) ohne oder ohne wesentlichen Beitrag zur rotierenden Masse der Nabe (112) ausgeführt ist, da das mindestens eine Element (126) nicht an der Drehmomentübertragung vom Innenring (114) über die Anschlussflächen auf den Kranzring (108) beteiligt ist, und/oder
e) aus einem Leichtmetall oder einem Faserverbundwerkstoff gefertigt ist.

10. Axiallüfterrad nach einem der Ansprüche 1 bis 9, wobei
a) eine axiale Wanddicke der Abdeckung (126) kleiner ist als eine axiale Wanddicke der Nabe (112), und/oder
b) die Abdeckung (126) auf einer stromaufwärtigen Seite der durch die Anschlussflächen definierten Drehebene angeordnet ist.

11. Axiallüfterrad nach einem der Ansprüche 1 bis 10, wobei die Anschlussflächen
a) entlang des Außenumfangs (118) durch den umlaufend geschlossenen Außenring entlang des Außenumfangs realisiert sind, und/oder
b) in einer Drehebene des Axiallüfterrads liegen.

12. Axiallüfterrad nach einem der Ansprüche 1 bis 11, wobei die Nabe (112)
a) in Leichtbauweise ausgeführt ist, insbesondere zwischen Innenring (114) und Außenumfang (118), und/oder
b) zumindest am Innenring (114) als Verbindungsstelle zur Antriebswelle hin ausbauchen oder gewölbt sein.

13. Axiallüfterrad nach einem der Ansprüche 1 bis 12, wobei der Innenring (114) auf einer stromabwärtigen Seite der durch die Anschlussflächen definierten Drehebene angeordnet ist.

14. Axiallüfterrad nach Anspruch 1, wobei die Abdeckung (126) auf der stromaufwärtigen Seite der Nabe (112) angeordnet ist, die eine Kreisscheibenfläche umfasst, wobei ein Außendurchmesser der Abdeckung (126) im Wesentlichen einem Innendurchmesser des Kranzrings (108) entspricht, sodass das Innere des Kranzrings (108) durch die Abdeckung (126) gegen Luftzirkulation verschlossen ist.

15. Axiallüfterrad nach Anspruch 14, wobei die Abdeckung (126) an einer Vielzahl von Befestigungsöffnungen (128) im Außenring (118) umlaufend befestigt ist.

16. Axiallüfterrad nach Anspruch 15, wobei der Außenring (118) der Nabe (112) vom Au-ßenring (118) in radialer Richtung auskragende Nabenstege (122) mit Befestigungsöffnungen (124) umfasst, durch welche die Nabe (112) mit dem Kranzring (108) verdrehfest verbunden ist.

17. Axiallüfterrad nach Anspruch 16, wobei die Abdeckung (126) eine Öffnung (130) zwischen Außenring (118) und Kranzring (108) verschließt, die aufgrund der vom Außenring (118) radial nach außen auskragenden Nabenstege (122) entsteht.

18. Kraftfahrzeug, insbesondere Nutzfahrzeug, das einen Kühler mit einem Axiallüfterrad nach einem der Ansprüche 1 bis 17 umfasst.

## Claims

1. An axial fan wheel (102), in particular for the radiator of a motor vehicle engine, comprising:
a crown ring (108) having a multiplicity of rotor blades (104); and
a hub (112) having an inner ring (114) which is connected or connectable to a drive shaft, and having, for the purpose of torque transmission, connection surfaces along an external circumference (118) of the hub (112) which are connected to the inner ring (114) and to the crown ring (108), wherein the hub (112) has through-passages (120) between the inner ring (114) and the external circumference (118), wherein the connection surfaces along the external circumference (118) are realized by an outer ring arranged radially inside the crown ring (108) along the external circumference,wherein the inner ring (114) is arranged outside a plane of rotation defined by the connection surfaces, **characterized in**
**that** at least one element (126), arranged in a rotationally fixed manner on the axial fan wheel inside the crown ring (108), is designed to maintain a pressure difference in the axial direction when the axial fan wheel (102) rotates;
**that** the at least one element (126) closes off the through-passages (120) between the inner ring (114) and the external circumference (118), and/or the interior of the crown ring (108); and
**that** the at least one element (126) is designed as a thin-walled cover (126).

2. The axial fan wheel according to Claim 1, wherein a surface portion, projected into the plane of rotation, of the hub (112) between the inner ring (114) and the external circumference (118) is smaller than a surface portion, projected into the plane of rotation, of the through-passages (120) between the inner ring (114) and the external circumference (118).

3. The axial fan wheel according to Claim 1 or 2, a radial width of the through-passages (120) is greater than a diameter (115) of the inner ring (114).

4. The axial fan wheel according to one of Claims 1 to 3, wherein the at least one element (126) is arranged rigidly on the hub (112).

5. The axial fan wheel according to one of Claims 1 to 4, wherein the at least one element (126) is manufactured from aluminium sheet.

6. The axial fan wheel according to one of Claims 1 to 5, wherein the at least one element (126) does not transmit any torque to the crown ring.

7. The axial fan wheel according to one of Claims 1 to 6, wherein a diameter of the at least one element (126)
a) is greater than an outer diameter of the external circumference (118), and/or
b) is equal to or smaller than an inner diameter of the external circumference (118).

8. The axial fan wheel according to one of Claims 1 to 7, wherein the at least one element (126) is arranged so as to be offset in the axial direction in relation to the hub (112) .

9. The axial fan wheel according to one of claims 1 to 8, wherein the at least one element (126)
a) prevents a recirculation of the air flow in the circumference of the hub (112), for example within the external circumference (118), and/or
b) is arranged on the axial fan wheel in a rotationally fixed manner, in particular without relative movement to the hub (112), and/or
c) prevents a pressure equalization or a pressure reduction of the air via the through-passages (120), and/or
d) is designed without or without substantial contribution to the rotating mass of the hub (112), because the at least one element (126) is not involved in the torque transmission from the inner ring (114) via the connecting surfaces to the crown ring (108), and/or
e) is manufactured from a light metal or a fiber composite material.

10. The axial fan wheel according to one of Claims 1 to 9, wherein
a) an axial wall thickness of the cover (126) is smaller than an axial wall thickness of the hub (112), and/or
b) the cover (126) is arranged on an upstream side of the plane of rotation defined by the connection surfaces. defined by the connecting surfaces.

11. The axial fan wheel according to one of Claims 1 to 10, wherein the connecting surfaces
a) are realized along the external circumference (118) by the circumferentially closed outer ring along the external circumference, and/or
b) lie in a plane of rotation of the axial fan wheel.

12. The axial fan wheel according to one of Claims 1 to 11, wherein the hub (112)
a) is designed in lightweight construction, in particular between the inner ring (114) and the external circumference (118), and/or
b) at least on the inner ring (114) as a connection point to the drive shaft, can be or curved or bulged.

13. The axial fan wheel according to one of Claims 1 to 10, wherein the inner ring (114) is arranged on a downstream side of the plane of rotation defined by the connecting surfaces.

14. The axial fan wheel according to Claim 1, wherein the cover (126) is arranged on the upstream side of the hub (112) comprising a circular disk surface, wherein an outer diameter of the cover (126) substantially corresponds to an inner diameter of the crown ring (108) so that the interior of the crown ring (108) is closed against air circulation by the cover (126).

15. The axial fan wheel according to Claim 15, wherein the cover (126) being circumferentially fastened to a plurality of fastening openings (128) in the external circumference (118).

16. The axial fan wheel according to Claim 15, wherein the external circumference (118) of the hub (112) comprises hub webs (122) projecting in radial direction from the external circumference (118) and having fastening openings (124) via which the hub (112) is connected to the crown ring (108) in a rotationally fixed manner.

17. The axial fan wheel according to Claim 16, wherein the cover (126) closes off an opening (130) between the the external circumference (118) and the crown ring (108) which emerges from the hub webs (122) projecting radially outwards from the external circumference (118).

18. A motor vehicle, in particular a utility vehicle, which comprises a radiator having an axial fan wheel according to one of Claims 1 to 17.

## Revendications

1. Roue de ventilateur axial (102), notamment pour le refroidisseur d'un moteur de véhicule automobile, comprenant :
une bague de couronne (108) munie d'une pluralité de pales (104) ; et
un moyeu (112) muni d'une bague intérieure (114), reliée ou pouvant être reliée avec un arbre d'entraînement, et de surfaces de raccordement, reliées pour le transfert d'un couple avec la bague intérieure (114) et la bague de couronne (108), le long d'une périphérie extérieure (118) du moyeu (112), le moyeu (112) présentant des évidements de passage (120) entre la bague intérieure (114) et la périphérie extérieure (118), les surfaces de raccordement le long de la périphérie extérieure (118) étant réalisées par une bague extérieure agencée radialement à l'intérieur de la bague de couronne (108) le long de la périphérie extérieure, la bague intérieure (114) étant agencée à l'extérieur d'un plan de rotation défini par les surfaces de raccordement, **caractérisée en ce que**
au moins un élément (126) agencé à l'intérieur de la bague de couronne (108) de manière immobile en rotation sur la roue de ventilateur axial est configuré de manière à maintenir, lorsque la roue de ventilateur axial (102) tourne, une différence de pression dans la direction axiale, **en ce que**
l'au moins un élément (126) ferme les évidements de passage (120) entre la bague intérieure (114) et la périphérie extérieure (118) et/ou l'intérieur de la bague de couronne (108), et **en ce que**
l'au moins un élément (126) est configuré sous forme de couvercle à paroi mince (126).

2. Roue de ventilateur axial selon la revendication 1, dans laquelle une proportion de surface, projetée dans le plan de rotation, du moyeu (112) entre la bague intérieure (114) et la périphérie extérieure (118) est inférieure à une proportion de surface, projetée dans le plan de rotation, des évidements de passage (120) entre la bague intérieure (114) et la périphérie extérieure (118) .

3. Roue de ventilateur axial selon la revendication 1 ou 2, dans laquelle une largeur radiale des évidements de passage (120) est supérieure à un diamètre (115) de la bague intérieure (114).

4. Roue de ventilateur axial selon l'une quelconque des revendications 1 à 3, dans laquelle l'au moins un élément (126) est agencé de manière rigide sur le moyeu (112).

5. Roue de ventilateur axial selon l'une quelconque des revendications 1 à 4, dans laquelle l'au moins un élément (126) est fabriqué en tôle d'aluminium.

6. Roue de ventilateur axial selon l'une quelconque des revendications 1 à 5, dans laquelle l'au moins un élément (126) ne transfère pas de couple à la bague de couronne.

7. Roue de ventilateur axial selon l'une quelconque des revendications 1 à 6, dans laquelle un diamètre de l'au moins un élément (126)
a) est supérieur à un diamètre extérieur de la périphérie extérieure (118), et/ou
b) est inférieur ou égal à un diamètre intérieur de la bague de couronne (108).

8. Roue de ventilateur axial selon l'une quelconque des revendications 1 à 7, dans laquelle l'au moins un élément (126) est agencé en décalage par rapport au moyeu (112) dans la direction axiale.

9. Roue de ventilateur axial selon l'une quelconque des revendications 1 à 8, dans laquelle l'au moins un élément (126)
a) empêche une recirculation du flux d'air à la périphérie du moyeu (112), par exemple à l'intérieur de la périphérie extérieure (118), et/ou
b) est agencé sur la roue de ventilateur axial de manière immobile en rotation, notamment sans mouvement relatif par rapport au moyeu (112), et/ou
c) empêche un équilibrage de pression ou un affaiblissement de pression de l'air à travers les évidements de passage (120), et/ou
d) est réalisé sans ou sans contribution significative à la masse rotative du moyeu (112), étant donné que l'au moins un élément (126) ne participe pas au transfert d'un couple de la bague intérieure (114) à la bague de couronne (108) par l'intermédiaire des surfaces de raccordement, et/ou
e) est fabriqué en un métal léger ou en un matériau composite fibreux.

10. Roue de ventilateur axial selon l'une quelconque des revendications 1 à 9, dans laquelle
a) une épaisseur de paroi axiale du couvercle (126) est inférieure à une épaisseur de paroi axiale du moyeu (112), et/ou
b) le couvercle (126) est agencé sur un côté amont du plan de rotation défini par les surfaces de raccordement.

11. Roue de ventilateur axial selon l'une quelconque des revendications 1 à 10, dans laquelle les surfaces de raccordement
a) sont réalisées le long de la périphérie extérieure (118) par la bague extérieure fermée sur la circonférence le long de la périphérie extérieure, et/ou
b) sont situées dans un plan de rotation de la roue de ventilateur axial.

12. Roue de ventilateur axial selon l'une quelconque des revendications 1 à 11, dans laquelle le moyeu (112)
a) est de construction légère, notamment entre la bague intérieure (114) et la périphérie extérieure (118), et/ou
b) est bombé ou évasé au moins sur la bague intérieure (114) en tant que point de liaison avec l'arbre d'entraînement.

13. Roue de ventilateur axial selon l'une quelconque des revendications 1 à 12, dans laquelle la bague intérieure (114) est agencée sur un côté aval du plan de rotation défini par les surfaces de raccordement.

14. Roue de ventilateur axial selon la revendication 1, dans laquelle le couvercle (126) est agencé sur le côté amont du moyeu (112) comprenant une surface de disque circulaire, un diamètre extérieur du couvercle (126) correspondant essentiellement à un diamètre intérieur de la bague de couronne (108), de telle sorte que l'intérieur de la bague de couronne (108) est fermé par le couvercle (126) contre la circulation d'air.

15. Roue de ventilateur axial selon la revendication 14, dans laquelle le couvercle (126) est fixé sur la circonférence à une pluralité d'ouvertures de fixation (128) dans la bague extérieure (118).

16. Roue de ventilateur axial selon la revendication 15, dans laquelle la bague extérieure (118) du moyeu (112) comprend des nervures de moyeu (122) en saillie dans la direction radiale par rapport à la bague extérieure (118), avec des ouvertures de fixation (124) par lesquelles le moyeu (112) est relié de manière immobile en rotation à la bague de couronne (108).

17. Roue de ventilateur axial selon la revendication 16, dans laquelle le couvercle (126) ferme une ouverture (130) entre la bague extérieure (118) et la bague de couronne (108), qui se forme en raison des nervures de moyeu (122) faisant saillie radialement vers l'extérieur par rapport à la bague extérieure (118).

18. Véhicule automobile, notamment véhicule utilitaire, qui comprend un refroidisseur muni d'une roue de ventilateur axial selon l'une quelconque des revendications 1 à 17.
